(19) Europäisches Patentamt

European Patent Office

Office européen des brevets

(11) **EP 0 924 500 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
***G01J 5/00*** *(2006.01)*

(21) Anmeldenummer: **98123129.3**

(22) Anmeldetag: **04.12.1998**

(54) **Verfahren zum Messen elektromagnetischer Strahlung**

Method for the measurement of electromagnetic radiation

Procédé de mesure du rayonnement électromagnétique

(84) Benannte Vertragsstaaten:
**DE FR GB IT**

(30) Priorität: **08.12.1997 DE 19754386**
**12.11.1998 DE 19852320**
**02.12.1998 DE 19855683**

(43) Veröffentlichungstag der Anmeldung:
**23.06.1999 Patentblatt 1999/25**

(73) Patentinhaber: **STEAG RTP Systems GmbH**
**89160 Dornstadt (DE)**

(72) Erfinder:
• **Hauf, Markus**
**89335 Ichenhausen (DE)**

• **Knarr, Thomas**
**89129 Langenau (DE)**
• **Walk, Heinrich**
**89604 Allmendingen (DE)**
• **Balthasar, Horst**
**89231 Neu-Ulm (DE)**
• **Müller, Uwe**
**74363 Eibensbach (DE)**

(74) Vertreter: **Wagner, Karl H. et al**
**WAGNER & GEYER**
**Patentanwälte**
**Gewürzmühlstrasse 5**
**80538 München (DE)**

(56) Entgegenhaltungen:
**EP-A- 0 539 984       WO-A-94/00744**

**Beschreibung**

Die Erfindung betrifft ein Verfahren zum Messen elektromagnetischer Strahlung, die von einer Oberfläche eines Gegenstands abgestrahlt wird.

Aus der EP 0 539 984 A2 ist ein derartiges Verfahren bekannt, bei dem die zu messende elektromagnetische Strahlung von einer Oberfläche eines Gegenstands abgestrahlt wird, der durch elektromagnetische, von wenigstens einer Strahlungsquelle abgegebenen elektromagnetischen Strahlung bestrahlt wird, wobei die von der Strahlungsquelle abgegebene Strahlung mit wenigstens einem ersten Strahlungsdetektor und die vom bestrahlten Gegenstand abgegebene Strahlung mit wenigstens einem zweiten Strahlungsdetektor ermittelt wird. Die von wenigstens einer Strahlungsquelle abgegebene Strahlung wird mit wenigstens einem charakteristischen Parameter aktiv moduliert, und die vom zweiten Strahlungsdetektor ermittelte Strahlung wird zur Kompensation der vom Gegenstand reflektierten Strahlung der Strahlungsquelle durch die vom ersten Strahlungsdetektor ermittelte Strahlung korrigiert.

Aus der WO 94/00744 A ist ein weiteres Verfahren zum Messen einer von einer Oberfläche eines Gegenstandes abgestrahlten elektromagnetischen Strahlungbekannt. Einrichtungen sind vorgesehen, um die Intensität der von der Strahlungsquelle bereitgestellten Strahlung zu modulieren. Ein Detektor misst die vom Gegenstand abgestrahlte Strahlungsintensität, während ein weiterer Detektor die von der Strahlungsquelle direkt abgegebene Strahlung misst.

Ein weiteres Verfahren ist beispielsweise aus der US-5 490 728 A im Zusammenhang mit der Fertigung von Halbleitersubstraten in einer Reaktionskammer bekannt. Die von der Strahlungsquelle abgegebene elektromagnetische Strahlung ist dabei naturgemäß mit einer Welligkeit überlagert, die durch Schwankungen der Netzspannung oder auf Grund von Phasen-Anschnittssteuerungen ungewollt auftreten. Auf diese Welligkeit kann jedoch kein Einfluss genommen werden, und sie kann auch nicht bewusst gewählt werden. Sie ist daher für eine bewusste Ausnutzung als Charakteristik der von der Strahlungsquelle abgegebenen Strahlung - wenn überhaupt - nur bedingt tauglich.

Ferner sei auf die DE-A-26 27 753 verwiesen, welche eine Vorrichtung zur Dickenmessung und -steuerung optisch wirksamer Dünnschichten während ihres Aufbaus in Vakuumbeschichtungsanlagen zeigt. Die Messung und Steuerung wird erreicht durch Erfassen des Reflexions bzw. Transmissionsverhaltens von Schichtdicken zwischen Bruchteilen und einigen Vielfachen der Wellenlänge des verwendeten, im wesentlichen monochromatischen Messlichts und durch Unterbrechung des Beschichtungsvorgangs bei Erreichen einer vorbestimmten Schichtdicke. Die Vorrichtung besteht aus einer Messlichtquelle für einen fokussierten Messlichtstrahl, eine Zerhackervorrichtung, einen in der Achse des Messlichtstrahls unter einem Winkel von 45° angeordneten Strahlenteiler, einem Messlichtempfänger mit vorgeschaltetem Monochromator, sowie aus einer Differenziereinrichtung für das Messsignal und einer Unterbrechungseinrichtung für den Beschichtungsvorgang.

Darüber hinaus ist in der DE-A-42 24 435 ein optisches Interface für die Infrarotüberwachung von Klarsichtscheiben beschrieben, bei dem das Licht einer Infrarotstrahlungsquelle durch Lichtwellenleiter ins Innere des Interface geleitet und dort zum Belichten der Scheibenoberfläche ausgestrahlt wird. Die an der zu überwachenden Scheibe reflektierte Strahlung wird durch den Eingang eines anderen Lichtwellenleiters aufgenommen und durch den Lichtwellenleiter über einen Tageslichtfilter auf einen Photodetektor geleitet. Weiterhin zeigt die US-A-5 270 222 ein Verfahren und eine Vorrichtung für eine Diagnose und Prognose bei der Herstellung von Halbleitervorrichtungen. Die Vorrichtung weist einen Sensor für die Diagnose und Prognose auf, der unterschiedliche optische Eigenschaften eines Halbleiterwafers misst. Der Sensor weist einen Sensorarm und einen optoelektronische Steuerbox auf, zum Leiten kohärenter elektromagnetischer oder optischer Energie in Richtung des Halbleiterwafers.

Der Erfindung liegt daher die Aufgabe zugrunde, ein Verfahren der eingangs genannten Art zu schaffen, mit dem die Messung elektromagnetischer Strahlung und die Ermittlung der daraus abgeleiteten Parameter und Werte auf einfache Weise noch genauer durchgeführt werden kann.

Die gestellte Aufgabe wird erfindungsgemäß durch das in Anspruch 1 angegebene Verfahren gelöst. Vorteilhafte Ausführungsformen sind in den abhängigen Ansprüchen beansprucht.

Eine nichtperiodische Modulation lässt sich z. B. dadurch erhalten, dass der charakteristische Parameter mit einem positiven oder negativen Inkrement, das mittels eines Zufallsmechanismus erzeugt wird, über eine Verknüpfungsoperation (z. B. Addition, Multiplikation oder einer Verknüpfung mit einer Look-up-Tabelle) verknüpft wird. Dabei wird das Inkrement nach Ablauf eines Zeitintervalls jeweils neu nach einem Zufallsprinzip bestimmt. Das Zeitintervall selbst kann dabei konstant, nach einer vordefinierten Funktion oder wiederum nach einem Zufallsprinzip bestimmt werden. Wichtig bei der nichtperiodischen Modulation ist, dass die durch Zufallsprinzipien bestimmten Parameter (Inkrement und/oder Zeitintervall) bekannt und innerhalb einer Auswertevorrichtung oder eines Auswerteverfahrens zur Signalanalyse zu Verfügung stehen. Die durch ein Zufallsprinzip bestimmten Parameter (Inkrement und/oder Zeitintervall) können einer beliebig vordefinierten Verteilungsfunktion genügen. Sie können z. B. gleich-, gauß- oder poissonverteilt sein, wodurch die jeweiligen Erwartungswerte der Parameter ebenfalls vordefiniert sind. Der Vorteil einer nichtperiodischen Modulation liegt darin, dass dadurch periodische Störeinflüsse unterdrückt werden können.

Die Strahlungsquelle ist vorzugsweise eine Heizlampe und der bestrahlte Gegenstand ist vorzugsweise ein Halbleitersubstrat, das einer thermischen Behandlung unterzogen wird.

Auf Grund der bewussten, aktiven und dadurch bekannten Modulation der Strahlungsquelle mit einem charakteristischen Parameter ist es möglich, die Unterscheidung zwischen der vom Gegenstand selbst abgestrahlten Strahlung, die für die Ermittlung der Eigenschaften des Gegenstands erforderlich ist, noch genauer von der vom Gegenstand reflektierten Strahlung der Strahlungsquelle zu unterscheiden. Auf diese Weise ist es möglich, die Eigenschaften des Gegenstands, beispielsweise die Temperatur, die Emissivität, die Transmissivität, die Reflektivität oder die Schichtdicken oder -eigenschaften eines vom Material des Gegenstands unterschiedlichen Materials auf dem Gegenstand noch genauer und in Realzeit zu bestimmen.

Gemäß einer besonders vorteilhaften Ausführungsform der Erfindung wird die aktive Modulation der von der Strahlungsquelle abgegebenen Strahlung zu deren Charakterisierung bei der Korrektur der vom zweiten Strahlungsdetektor ermittelten Strahlung herangezogen. Durch die aktive und damit bekannte Modulation der von der Strahlungsquelle abgegebenen Strahlung ist die Charakterisierung und damit Unterscheidung dieser Strahlung von der eigentlich zu messenden Strahlung, die vom Gegenstand abgegeben wird, besonders einfach, zuverlässig und quantitativ genau.

Die von der Strahlungsquelle abgegebene Strahlung ist vorzugsweise amplituden-, frequenz- und/oder phasen-moduliert. Je nach den vorhandenen Gegebenheiten und Erfordernissen ist die Wahl der Modulationsart wählbar, wobei die Modulationsart insbesondere auch im Hinblick auf die Einfachheit und Zuverlässigkeit des Modulationsverfahrens, aber auch des Auswerteverfahrens und des Detektionsverfahrens auswählbar ist. Dabei ist unter Amplitudenmodulation die Modulation der Modulationsamplitude zu verstehen. Bevorzugt wird jedoch mit Intensitätsmodulation gearbeitet, deren Amplitude nicht moduliert wird, sondern eventuell langsam variiert.

Neben der Modultionsart ist es auch möglich, jede Signalform der Modulation einzusetzen. Besonders vorteilhaft ist es jedoch, dass bei einer Amplitudenmodulation eine Signalform mit möglichst stetigem Signalverlauf verwendet wird. Dies hat den Vorteil, dass auch bei einer Fourrier-Transformation hohe Frequenzen im wesentlichen nicht auftreten und daher auch die Zahl der Abtastungen pro Zeiteinheit bei der Detektion bzw. Verarbeitung des detektierten Signals gering bleiben kann, so dass mit einem einfachen Auswerteverfahren dennoch eine gute und genaue Messung durchführbar ist.

Eine weitere vorteilhafte Ausführungsform der Erfindung besteht darin, daß die Strahlungsquelle aus mehreren Einzel-Strahlungsquellen, beispielsweise aus mehreren Lampen besteht, die zu einer oder mehreren Lampenbänken zusammenfaßbar sind. Gemäß vorteilhaften Ausführungsformen im Zusammenhang mit aus mehreren Lampen bestehenden Strahlungsquellen ist wenigstens eine der Lampen in ihrer Strahlung moduliert. An sich kann die Modulation der Strahlung einer Lampe zur Erzielung der Vorteile des erfindungsgemäßen Verfahrens ausreichen, obgleich die Modulation von nur einer Lampe nur unter Einschränkungen an die Universalität des Meßverfahrens überhaupt ein sinnvolles Ergebnis liefert. Eine besonders einfache Ansteuerung der Lampen mit einem einzigen Leistungsschalter ist insbesondere auch dann gegeben, wenn wenigstens zwei Lampen oder alle Lampen hinsichtlich ihrer Strahlung in der gleichen Weise moduliert werden. Vorteilhaft ist die Modulation der Strahlung von nur einer oder einigen Lampen, um unerwünschte Reflexionen zu vermeiden.

Je nach den Anwendungsfällen und Gegebenheiten ist es jedoch auch vorteilhaft, die Strahlung der Lampen unterschiedlich zu modulieren, beispielsweise dann, wenn die Lampenstrahlung in Abhängigkeit von der Lage der Lampen oder von der jeweils spezifischen Lampe gegenüber der Strahlung anderer Lampen oder gegenüber anderen Lampen unterschieden werden soll.

Die Strahlenmodulation der einzelnen Lampen oder Strahlungsquellen ist vorzugsweise für wenigstens einige von ihnen zeitlich synchron oder in einer festen zeitlichen Zuordnung zueinander vorgesehen, obgleich in bestimmten Anwendungsfällen auch zeitlich nicht synchrone Strahlenmodulationen vorteilhaft sein können.

Gemäß einer besonders vorteilhaften Ausgestaltung der Erfindung ist der Modulationsgrad und insbesondere die Modulationstiefe der von der Strahlungsquelle abgegebenen Strahlung, - gegebenenfalls auch von Strahlungsquelle zu Strahlungsquelle unterschiedlich -, von der abgestrahlten Lampenintensität unabhängig. Diese sogenannte Absolut-Modulation ist also unabhängig vom Grundpegel oder Gleichstromsignal, mit dem die Strahlungsquelle oder Lampe angesteuert wird. Diese Ausführungsform der Erfindung weist den Vorteil auf, daß während des Anstiegs der Intensität der Strahlenquelle, der gegebenenfalls schnell vorgenommen werden soll, die volle Ansteuerung ausgenutzt werden kann und nicht durch eine zu große Modulation in ihrer Intensität eingeschränkt ist.

In anders gelagerten Anwendungsfällen ist jedoch die Ausführungsform der Erfindung vorteilhafter, bei der der Modulationsgrad bzw. die Modulationstiefe von der abgestrahlten Intensität der Strahlungsquelle abhängig ist. Diese sogenannte Relativ-Modulation, bei der beispielsweise die Stärke des Wechselstrom-Ansteuersignals von der Stärke des Gleichstrom-Ansteuersignals der Strahlungsquelle abhängt oder ihr proportional ist, hat den Vorteil, daß der relative Modulationgrad konstant ist oder sich nur in geringerem Maße ändert, wodurch die Detektion der Modulation und die Auswertung einfacher und mit weniger aufwendigen Geräten durchführbar ist.

Bei einer weiteren Ausführungsform der Erfindung wird der Modulationsgrad oder die Modulationstiefe gesteuert oder auch aktiv geregelt.

Gemäß einer weiteren sehr vorteilhaften Ausgestaltung der Erfindung ist Lampenintensität und/oder die Modulation selbst pulsweiten-moduliert. Gemäß einer alternativen oder zusätzlichen Ausführungsform der Erfindung wird die Strahlung der Strahlungsquelle durch Verwendung von Tabellenwerten mit einem Datenverarbeitungsprogramm moduliert. Eine weitere sehr vorteilhafte Ausgestaltung der Erfindung besteht auch darin, die Strahlung durch Ändern der Zählerfrequenz von Generatoren für die Pulsweiten-Modulation zu modulieren.

Die Lampenleistung wird durch Pulsweiten-Modulation verändert. Die Strahlungsintensität ist dabei eine Funktion der Wendeltemperatur, die jedoch im stationären, eingeschwungenen Zustand direkt mit der Lampenleistungen korrespondiert.

Die Strahlung der Strahlungsquelle wird vorzugsweise durch eine Modulation des Ansteuersignals bzw. der Ansteuersignale für die Strahlungsquelle bzw. die Lampen moduliert. Wie im weiteren im einzelnen noch ausgeführt werden wird, ist die Stelle, an der das Ansteuersignal innerhalb der Signalerzeugung moduliert wird, je nach den Erfordernissen und Gegebenheiten wählbar. Besonders vorteilhaft ist es dabei, wenn das Ansteuersignal nach dessen Erzeugung unmittelbar vor Zuführung zu der Strahlungsquelle oder den Lampen moduliert wird.

Die vorliegende Erfindung ist mit großem Vorteil zur Bestimmung der Temperatur, Reflektivität und/oder Emissivität eines Gegenstands anwendbar, beispielsweise im Zusammenhang mit einer Vorrichtung zur thermischen Behandlung von Substraten etwa in einem Ofen, in dem die Substrate schnell und mit einem möglichst genauen, vorgegebenen Temperaturverlauf aufgeheizt und abgekühlt werden.

Gemäß der Erfindung wird also die von wenigstens einer Strahlungsquelle, beispielsweise eine Heizlampe abgegebene Strahlung und die vom aufzuheizenden Gegenstand herrührende Strahlung ermittelt, wobei sich letztere aus der von dem Gegenstand emittierten Strahlung und der am Gegenstand reflektierten Strahlung zusammensetzt. Durch die beiden Messungen ist es möglich, die vom Gegenstand reflektierte Strahlung der Strahlungsquellen heraus zu korrigieren und damit die emittierte Strahlung, also die Wärmestrahlung des Gegenstands zu bestimmen, der normalerweise und auch im Falle eines Wafers kein schwarzer Strahler ist. Bei Kenntnis der Emissivität dieses Gegenstandes kann nunmehr auf die Strahlung eines schwarzen Körpers zurückgerechnet werden.

Gemäß der vorliegenden Erfindung werden die Amplituden der modulierten Komponenten, die auch als Wechselstrom- bzw. Wechselspannungs(AC)-Komponenten bezeichnet werden, ins Verhältnis gesetzt, die vom für den Gegenstand vorgesehenen Strahlungsdetektor und vom für die Strahlungsquellen vorgesehenen Strahlungsdetektor gemessen werden. Die sich aus dem Amplitudenverhältnis ergebende Zahl ist in erster Näherung proportional zur Reflektivität des Gegenstandes, beispielsweise des Wafers. Diese Zahl wird nun zweimal für die weitere Auswertung benutzt. Erstens wird sie benutzt, um die von dem Gegenstand emittierte Strahlung, also die Wärmestrahlung des Gegenstandes von der am Gegenstand reflektierten Strahlung der Strahlungsquelle zu unterscheiden. Zweitens wird diese Zahl benutzt, um die vom Gegenstand emittierte Strahlung, also die Wärmestrahlung auf die Strahlung eines schwarzen Körpers der gleichen Temperatur zurück zu skalieren. Durch Einsetzen des dabei gewonnenen, zurückskallierten Temperaturwert in die invertierte Planck'sche Strahlungsformel ergibt sich dann eindeutig eine Temperatur. Da das genannte Amplitudenverhältnis der Modulationen bei der Auswertung also zweimal verwendet wird, muß dieses möglichst genau gemessen werden, um bei der Auswertung und der Ermittlung der Temperatur des Gegenstandes genaue Werte zu erhalten. Das erfindungsgemäße Verfahren ermöglicht eine wesentlich genauere Bestimmung dieses Amplitudenverhältnisses, da die Modulationsparameter für jeden Heizzustand optimal vorgebbar sind und sowohl die Modulation als auch deren Auswertung wesentlich vereinfacht wird.

Bei einer besonders bevorzugten Ausführungsform der Erfindung ist der erste Detektor ein Strahlungsdetektor, der auf einfache und zuverlässige Weise die von der Strahlungsquelle abgegebene Strahlung mißt. Dabei wird die von der Strahlungsquelle abgegebene Strahlung vorteilhafterweise über optische Leitungen oder Lichtkanäle zu dem Strahlungsdetektor geleitet. Um eine akkurate Messung zu gewährleisten, sind die Strahlungsquellen und die optischen Leitungen oder Lichtkanäle relativ zueinander derart angeordnet, daß der erste Strahlungsdetektor ein Signal erzeugt, das frei von Einflüssen von Filamenthaltevorrichtungen oder anderen, den Strahlungsfluß oder die Strahlungstemperatur der Strahlungsquelle beeinträchtigender Mittel ist.

Gemäß einer anderen Ausführungsform der Erfindung kann der erste Detektor ein Temperatursensor, wie z. B. ein Thermoelement, sein, mit dem die Lampentemperatur und somit die abgestrahlte Intensität ermittelbar ist.

Bei einer weiteren Ausführungsform der Erfindung mißt der erste Detektor einen beliebigen mit der von der Strahlungsquelle abgegebenen Strahlung in Beziehung stehenden Parameter. So kann z. B. die Intensität über ein Impedanz-Meßvorrichtung, die die Impedanz (z. B. den Ohmschen Widerstand) eines Lampenfilaments mißt, ermittelt werden. Über eine geeignete Verarbeitungseinheit kann bei Kenntnis der Impedanz-Intensitäts-Relation der Strahlungsquelle, wie z. B. einer Heizlampe, deren abgestrahlte Intensität bzw. ein hierzu proportionaler Parameter ermittelt werden.

Die Erfindung wird nachstehend im Zusammenhang mit dem Beispiel einer Vorrichtung zum Aufheizen von Halbleiterwafern unter Bezugnahme auf die Figuren erläutert. Es zeigen:

Fig. 1     einen Längsschnitt durch eine Schnellheizanlage zur Behandlung von Halbleiterwafern in schematischer Darstellung,

Fig. 2      einen Querschnitt entlang der in Fig. 1 eingezeichneten Schnittlinie II-II,

Fig. 3a     und 3b schematische Diagramme zur Erläuterung des Modulationsgrads bzw. der Modulationstiefe unabhängig oder in Abhängigkeit von der Basisintensität der Strahlungsquelle und

Fig. 4      eine schematische Darstellung eines Blockschaltbilds zur Ansteuerung einer Strahlungsquelle bzw. einer Lampe nach dem erfindungsgemäßen Verfahren.

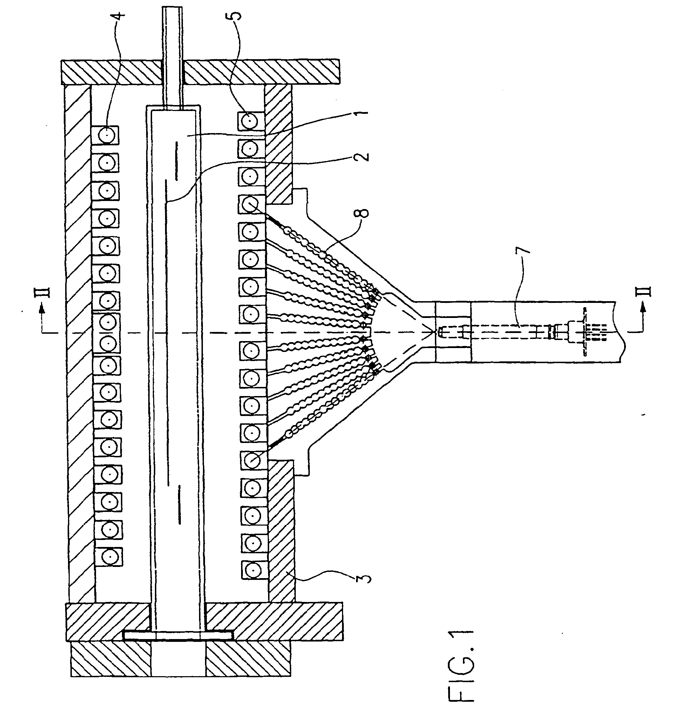

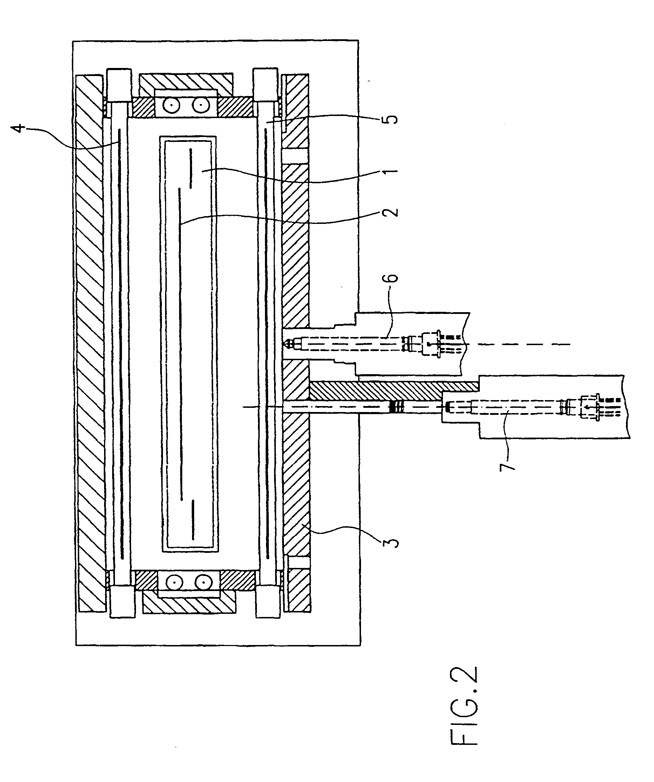

Die in Fig. 1 und 2 dargestellte Ausführungsform eines Schnellheizofens zur Behandlung von Halbleiterwafern 2 zeigt eine vorzugsweise aus Quarzglas bestehende Reaktionskammer 1 mit einem darin befindlichen Halbleiterwafer 2. Die Reakionskammer 1 ist von einem Gehäuse 3 umgeben, das jeweils oben und unten Lampen 4, 5 aufweist, deren Strahlung auf die Reaktionskammer 1 gerichtet sind.

Vorteilhafterweise besteht die Reaktionskammer 1 im wesentlichen aus einem für die Lampenstrahlung im wesentlichen transparenten Material, das auch hinsichtlich der Meßwellenlängen oder der Meßwellenlängenspektren der Pyrometer oder der verwendeten Strahlungsdetektoren transparent ist. Mit Quarzgläser und/oder Saphir, die einen über das Lampenspektrum gemittelten Absorptionskoeffizienten von etwa 0.1 1/cm bis 0.001 1/cm haben, lassen sich geeignete Reaktionskammern für Schnellheizsysteme aufbauen, bei denen die Dicke der Reaktionskammerwand zwischen 1mm und mehreren Zentimetern, beispielsweise 5 cm betragen kann. Je nach Reaktionskammerwanddicke kann die Materialauswahl hinsichtlich des Absorptionskoeffizienten erfolgen.

Kammerwanddicken im Zentimeterbereich sind insbesondere dann erforderlich, wenn in der Reaktionskammer 1 ein Unterdruck (bis hin zum Ultra-Hochvakuum) oder ein Überdruck erzeugt werden soll. Beträgt beispielsweise der Reaktionskammerdurchmesser etwa 300mm, so erhält man mit einer Quarzglasdicke von ca. 12mm bis 20mm eine hinreichende mechanische Stabilität der Kammer 1, so daß diese evakuiert werden kann. Die Reaktionskammerwanddicke wird entsprechend dem Wandmaterial, der Kammergröße und der Druckbelastungen dimensioniert.

Ein schematisch dargestelltes Pyrometer 6 (vgl. insbesondere Fig. 2) mit einem großen Eintrittswinkel mißt die vom Halbleiterwafer 2 emittierte Strahlung sowie die am Halbleiterwafer 2 reflektierte Strahlung der Lampen 5, die im dargestellten Ausführungsbeispiel als Stablampen ausgebildet sind. Eine Anordnung dieser Art ist bekannt und beispielsweise in der DE 44 37 361 C oder der nicht vorveröffentlichten DE 197 37 802 A derselben Anmelderin beschrieben, so daß zur Vermeidung von Wiederholungen darauf Bezug genommen wird, und diese Druckschriften insofern zum Inhalt der vorliegenden Beschreibung gemacht werden.

Als Stablampen werden bevorzugt Halogenlampen verwendet, deren Filament wenigstens teilweise eine Wendelstruktur aufweist. Durch eine wenigstens teilweise Wendelstruktur läßt sich vorteilhaft ein bestimmtes vordefiniertes geometrisches und spektrales Abstrahlprofil der Lampe erreichen. Hierbei kann das Filament der Lampe z. B. abwechselnd gewendelte und ungewendelte Filamentabschnitte umfassen. Das Abstrahlprofil (sowohl das geometrische als auch das spektrale) ist in diesem Falle im wesentlichen durch den Abstand benachbarter gewendelter Filamentabschnitte bestimmt. Eine weitere Möglichkeit das Lampenabstrahlprofil zu definieren besteht z. B. darin, daß die Dichte der Filamentstruktur (z. B. der Wendeldichte) entlang des Filaments variiert wird.

Soll das Lampenprofil steuerbar sein, so lassen sich vorteilhaft Lampen, vorzugsweise Stablampen, mit mehreren einzelansteuerbaren Filamenten einsetzen. Lampen mit steuerbarem Lampenprofil sind insbesondere in Schnellheizanlagen zur Wärmebehandlung großflächiger Substrate, wie z. B. 300mm-Halbleiterwafer, vorteilhaft, da sich mit diesen Lampen und einer geeigneten Lampenansteuervorrichtung ein sehr homogenes Temperaturprofil entlang der Substratoberfläche erzielen läßt. Durch die Superposition der Einzelabstrahlprofile der Filamente ergibt sich ein in weiten Bereichen einstellbares Gesamtabstrahlprofil der Lampe. Im einfachsten Falle umfaßt z. B. eine Halogenlampe zwei Filamente, z. B. jeweils mit Wendelstruktur oder wenigstens teilweise gewendelter Struktur, wobei die Wendeldichte und/oder der Abstand der gewendelten Filamentabschnitte des ersten Filaments vom ersten Ende zum zweiten Ende der Lampe zunimmt, und die Wendeldichte und/oder der Abstand der gewendelten Filamentabschnitte des zweiten Filaments entsprechend umgekehrt vom ersten zum zweiten Ende der Lampe abnimmt. Das Gesamtabstrahlprofil kann somit durch die Wahl der Stromstärke in den beiden Filamenten in weiten Bereichen variiert werden. Eine weitere Ausgestaltungsmöglichkeit einer Lampe mit steuerbarem Abstrahlprofil besteht darin, daß das Filament der Lampe wenigstens drei elektrische Anschlüsse umfaßt, wobei jeweils zwischen den Anschlüssen unterschiedliche Betriebsspannungen gelegt werden. Dadurch läßt sich abschnittsweise die Filamenttemperatur, und damit die Abstrahlcharakteristik der Lampe, entlang des Filaments steuern.

Alternativ zu den bisher beschriebenen Lampen lassen sich auch Plasma- oder Bogenlampen einsetzen, wobei auch hier das Abstrahlprofil einstellbar ist. So läßt sich beispielsweise das Lampenspektrum über die Stromdichte vom UV-Bereich bis hin zum nahen Infrarot einstellen. Die Bogenlampen haben hinsichtlich der aktiven Modulation den Vorteil, daß sie mit höherer Modulationsfrequenz betrieben werden können. Dadurch vereinfachen sich sowohl die Signalverarbeitungselektronik als auch die Auswerteverfahren.

Ein weiteres Pyrometer 7 erhält über optische Leitungen oder Lichtkanäle 8 das von den Lampen 5 abgestrahlte Licht direkt zugeleitet. Dabei sind die Strahlungsquellen und/oder die Lichtkanäle bevorzugt so angeordnet, daß das Lampenpyrometersignal von einem Lampen- oder Filamentabschnitt resultiert, der frei von Filamenthaltevorrichtungen oder anderen, den Strahlungsfluß oder die Temperatur des durch die Lichtkanäle beobachteten Filament- oder Lampenabschnitts beeinträchtigenden Mitteln ist. Um Wiederholungen hinsichtlich des Lampenpyrometers 7 und der Anordnung zum Bestrahlen des Lampenpyrometers 7 mit dem Licht der Lampen 5 zu vermeiden, wird auf die das gleiche Anmeldedatum aufweisende DE 197 54 385 derselben Anmelderin verwiesen, die insofern zum Inhalt der vorliegenden Anmeldung gemacht wird.

Die Ausgangssignale der Pyrometer 6 und 7 werden einer nicht dargestellten Auswerteschaltung zugeführt, die die vom Halbleiterwafer 2 emittierte Strahlung dadurch ermittelt, daß sie die auf das Pyrometer 6 fallende Strahlung mit der vom Pyrometer 7 ermittelten Strahlung in Bezug setzt und dadurch die Strahlung ermittelt, die vom Halbleiterwafer 2 emittiert wird. Dies ist deshalb möglich, weil die von den Lampen 5 emittierte Strahlung aktiv und in einer definierten Weise moduliert ist. Diese Modulation ist auch in der vom Wafer-Pyrometer 6 aufgenommenen Strahlung enthalten, so daß durch Vergleich oder in Beziehungsetzen der Modulationsgrade oder Modulationstiefen der von den Pyrometern 6 und 7 aufgenommenen Strahlung eine Kompensation der vom Halbleiterwafer 2 reflektierten Lampenstrahlung in der vom Waferpyrometer 6 aufgefangenen Strahlung möglich ist, und dadurch die vom Halbleiterwafer 2 emittierte Strahlung und damit dessen Temperatur, Reflektivität, Transmissivität und/oder Emissivität genau gemessen werden kann.

Ein weiteres, entsprechendes Lampenpyrometer, wie dies in Fig. 1 und 2 dargestellt und zuvor beschrieben ist, kann gemäß einer weiteren Ausführungsform auch mit entsprechenden Lichtleitungen oder -schächten auf der anderen Seite des Gehäuses 3 zur Messung der Lampenstrahlung der oberen Lampen 4 vorgesehen sein. Das obere Lampenpyrometer entspricht dabei in seiner Funktion dem des unteren Lampenpyrometers 7, indem das obere Lampenpyrometer die Strahlung und deren Intensität bezüglich der oberen Lampen 4 mißt. Dabei ist es besonders vorteilhaft, wenn die Modulationsart oder der Modulationsgrad der Lampen der oberen Lampenbank unterschiedlich zum Modulationsgrad oder der Modulationsart der unteren Lampenbank ist. Durch Vergleich des vom Waferpyrometer 6 aufgenommenen Lichtes bzw. seiner Modulationsart oder seines Modulationsgrads mit der Modulationsart bzw. dem Modulationsgrad der mit dem oberen Lampen-Pyrometer ermittelten Intensität in einer nicht dargestellten Auswerteeinheit ist es darüber hinaus möglich, auch die Transmissivität des Halbleiterwafers 2 zu ermitteln und daraus Rückschlüsse auf die Temperatur, die Emissivität und/oder die Reflektivität des Wafers 2 zu ziehen.

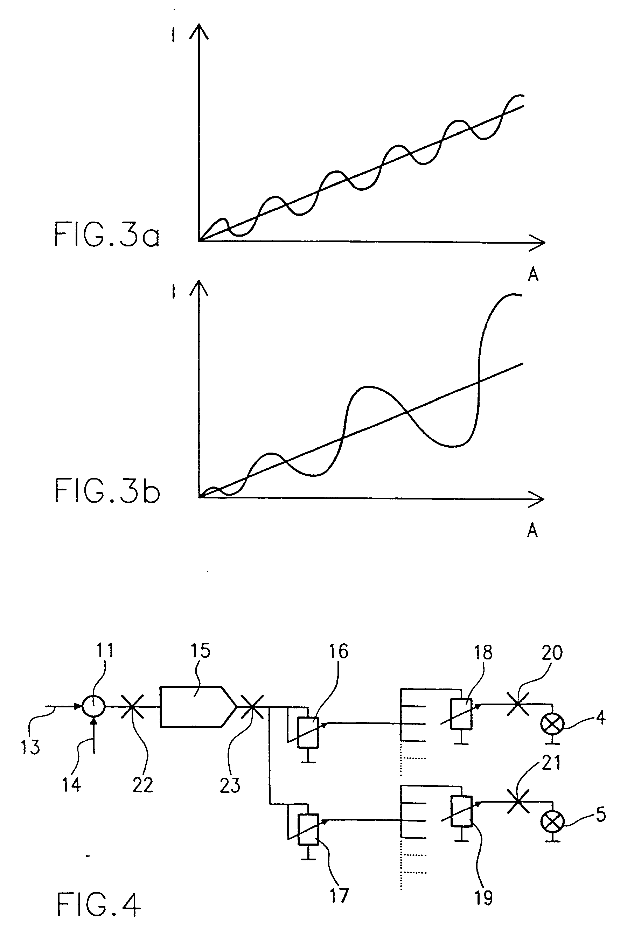

In den in Fig. 3a und 3b dargestellten Beispielen für eine periodische Modulation sind jeweils die Intensitäten I der Strahlungsquellen über der Zeit aufgetragen. Wie Fig. 3a zeigt, ist der Modulationsgrad bzw. die Modulationstiefe im wesentlichen konstant und unabhängig von der von der Strahlungsquelle abgegebenen Strahlungsintensität, während bei dem in Fig. 3b dargestellten Beispiel der Modulationsgrad oder die Modulationstiefe von der abgestrahlten Intensität der Strahlungsquelle bzw. der Größe ihres Ansteuersignals abhängt bzw. zu ihr proportional dazu ist.

Die sogenannte Absolut-Modulation gemäß Fig. 3a weist den Vorteil auf, daß während des Hochheizens des Halbleiterwafers 2 bzw. der Reaktionskammer 1 die Heizleistung durch die Modulation praktisch nicht beeinträchtigt wird, und daher die gesamte Intensität für die schnelle Aufheizung zur Verfügung steht. Dagegen weist die sogenannte Relativ-Modulation gemäß Fig. 3b den Vorteil auf, den Modulationsgrad bzw. die Modulationstiefe um so stärker vorliegen zu haben, je höher die Abstrahlleistung der Strahlungsquellen ist. Ein Steuern oder aktives Regeln der Modulationstiefe ist ebenfalls möglich.

In Fig. 4 ist eine schematische Schaltungsanordnung zur Ansteuerung einer Strahlungsquelle oder Lampen 11 zur Erzeugung einer Strahlung bzw. eines Strahlungsverlaufs für eine bestimmte Wafertemperatur bzw. eines bestimmten Temperaturverlaufs dargestellt, mit der der Wafer 2 aufgeheizt bzw. durch entsprechendes Abschalten oder Verringern der Intensität der Lampen abgekühlt werden soll.

In einem Komparator 11 wird die mit dem Waferpyrometer 6 indirekt gemessene Wafertemperatur (Anschluß 13) jeweils mit einer Soll-Temperatur 14 verglichen und das Vergleichssignal einem Regler 15 zugeführt, an dessen Ausgang das Ansteuersignal entsprechend der Einstellelemente 16, 17 auf die beiden Lampen bzw. Lampenbänke aufgeteilt wird. Danach wird das Ansteuersignal durch Aufteiler 18, 19 auf die einzelnen Lampen 4, 5 der Lampenbänke aufgeteilt, wobei der Übersichtlichkeit halber lediglich jeweils ein Aufteiler 18, 19 konkret dargestellt ist, der das Ansteuersignal an die Lampe 4 bzw. 5 abgibt.

Besonders vorteilhaft ist es, wenn das Ansteuersignal unmittelbar vor der Lampe 4 bzw. 5 moduliert ist, da auf diese Weise Verzerrungen vermieden werden können, die durch die Lampenansteuerschaltung hervorgerufen werden könnten. In diesem Falle erfolgt die Modulation also am Schaltungspunkt 20 bzw. 21 durch nicht dargestellte Modulationseinrichtungen, beispielsweise durch programmierbare Kurven-, Amplituden- und/oder Frequenzverläufe.

Die Modulation kann jedoch auch an anderen Stellen innerhalb der Ansteuerschaltung gemäß Fig. 4, beispielsweise am Schaltungspunkt 22 oder am Schaltungspunkt 20 vor oder nach dem Regler 23 vorgenommen werden. In diesem Falle ist jedoch eine individuelle Modulation der Ansteuersignale für jeweils eine Lampe nicht möglich, da die Modulation des gemeinsamen Ausgangssignals einheitlich erfolgt.

Die Modulation ist mittels eines entsprechenden Datenverarbeitungsprogramms auf einfache Weise durchführbar. Durch Software-Tabellen lassen sich praktisch sämtliche Kurvenformen und Frequenzen frei programmieren, wobei die Länge der Tabelle die Frequenz bestimmt, da die Tabelle mit einer festen Zeitbasis (zum Beispiel 1 ms) abarbeitbar ist und nach Erreichen des Tabellenendes beliebig oft wiederholt werden kann. Die Tabelle kann zum Beispiel mit einer Basis von $2^8 = 256$ angelegt sein, wobei der Algorithmus für die Modulation beispielsweise lautet:

$$C_{mod} = C_{DC} \cdot \frac{T(n)}{2^{Basis}}$$

Dabei ist $C_{mod}$ der Modulationsgrad, der $C_{DC}$ der Wert der nicht modulierten bzw. Grund-Intensität oder -Amplitude und $T(n)$ sind die jeweiligen diskreten Tabellenwerte.

Auf diese Weise können beliebige Modulationsgrade oder -tiefen, Kurvenformen und Frequenzen auf einfache Weise programmiert werden.

Mit beispielsweise einer 100%igen Modulation bei 125 Hz ergeben sich die diskreten Tabellenwerte mit 256, 435, 512, 435, 256, 76, O, 76.

Der Durchschnittswert der Tabellenwerte muß dabei dem Divisor entsprechen, damit die resultierende integrierte Leistung unverändert bleibt.

Bei 10%iger Modulation mit 125 Hz ergeben sich die Tabellenwerte zu
256, 274, 282, 274, 256, 238, 230, 238.

Die Auflösung, d. h. die Zahl der Tabellenwerte pro Zeiteinheit ist dadurch veränderbar, daß eine andere Basis genommen wird.

Dieses Ansteuer- bzw. Modulationsverfahren weist den Vorteil auf, daß nur Verschiebe- und Multiplikationsbefehle erforderlich sind, wenn der Divisor eine Zahl mit der Basis 2 ist.

Die Erfindung wurde zuvor anhand bevorzugter Ausführungsbeispiele erläutert. Dem Fachmann sind jedoch Ausgestaltungen und Abwandlungen möglich, ohne daß dadurch der Erfindungsgedanke verlassen wird. Das erfindungsgemäße Verfahren ist insbesondere auch im Zusammenhang mit anderen Vorrichtungen oder Meßverfahren als dem zuvor beschriebenen mit Vorteil einsetzbar, um mit einfachen Mitteln zuverlässige, reproduzierbare Meßergebnisse zu erhalten und daraus die Temperatur, die Transmissivität, die Emissivität und/oder die Reflektivität von Gegenständen mit hoher Genauigkeit zu ermitteln. Das erfindungsgemäße Verfahren ist auch mit anderen Detektoren als dem dargestellten und beschriebenen Lampenpyrometer einsetzbar. So kann z. B. statt des Lampenpyrometers ein Temperatursensor, wie z. B. ein Thermoelement verwendet werden, um die von den Lampen emittierte Strahlung zu ermitteln. Ferner ist es möglich, die von den Lampen emittierte Strahlung mittels einer Impedanzmessung des Lampenfilaments und nachfolgende Verarbeitung des gemessenen Werts zu ermitteln. Anhand einer Impedanz-Intensitäts-Relation der Lampe kann auf die von der Lampe abgestrahlte Intensität zurückgeschlossen werden.

**Patentansprüche**

1. Verfahren zum Messen elektromagnetischer Strahlung, die von einer Oberfläche eines Gegenstandes (2) abgestrahlt wird, der durch elektromagnetische, von wenigstens einer Strahlungsquelle (4,5) abgegebenen elektromagnetischen Strahlung bestrahlt wird, wobei die von der Strahlungsquelle (4,5) abgegebene Strahlung mit wenigstens einem ersten Detektor (7) und die vom bestrahlten Gegenstand (2) abgegebene Strahlung mit wenigstens einem zweiten, die Strahlung messenden Detektor (6) ermittelt wird, und wobei
die von wenigstens einer Strahlungsquelle (4,5) abgegebene Strahlung mit wenigstens einem charakteristischen Parameter aktiv moduliert wird, und die vom zweiten Detektor (6) ermittelte Strahlung zur Kompensation der vom Gegenstand (2) reflektierten Strahlung der Strahlungsquelle (4,5) durch die vom ersten Detektor (7) ermittelte Strahlung korrigiert wird,
**dadurch gekennzeichnet, daß** der charakteristische Parameter nichtperiodisch moduliert wird.

2. Verfahren nach Anspruch 1, **dadurch gekennzeichnet,**
**daß** die aktive Modulation der von der Strahlungsquelle (4,5) abgegebenen Strahlung zu deren Charakterisierung bei der Korrektur der vom zweiten Detektor (6) ermittelten Strahlung herangezogen wird.

3. Verfahren nach Anspruch 1 oder 2, **dadurch gekennzeichnet, daß** die von wenigstens einer Strahlungsquelle (4,5) abgegebene Strahlung amplituden-, frequenz- und/oder phasenmoduliert ist.

4. Verfahren nach einem der vorhergehenden Ansprüche, **dadurch gekennzeichnet, daß** die Signalform bei einer Amplitudenmodulation einen stetigen Signalverlauf aufweist.

5. Verfahren nach einem der vorhergehenden Ansprüche, **dadurch gekennzeichnet, daß** die Strahlungsquelle (4,5) aus mehreren Lampen besteht.

6. Verfahren nach Anspruch 5, **dadurch gekennzeichnet, daß** die Lampen ihre Strahlung von wenigstens einem Filament mit wenigstens teilweise gewendelter Filamentstruktur emittieren.

7. Verfahren nach Anspruch 6, **dadurch gekennzeichnet, daß** durch die Filamentstruktur der Lampe ein vordefiniertes geometrisches und spektrales Abstrahlprofil erzielbar ist.

8. Verfahren nach Anspruch 6 oder 7, **dadurch gekennzeichnet, daß** die Lampenstrahlung von Filamentabschnitten mit abwechselnder gewendelter und ungewendelter Filamentstruktur emittiert wird.

9. Verfahren nach einem der Ansprüche 6 bis 8, **dadurch gekennzeichnet, daß** die Lampenstrahlung von zwei einzelansteuerbaren Filamenten emittiert wird.

10. Verfahren nach einem der Ansprüche 6 bis 9, **dadurch gekennzeichnet, daß** die Lampenstrahlung von einem Filament mit wenigstens drei elektrischen Anschlüssen emittiert wird.

11. Verfahren nach einem der Ansprüche 6 bis 10, **dadurch gekennzeichnet, daß** die Dichte der Filamentstruktur entlang des Filaments variiert.

12. Verfahren nach einem der vorhergehenden Ansprüche, **dadurch gekennzeichnet, daß** die Strahlung von einer Halogenlampe emittiert wird.

13. Verfahren nach einem der vorhergehenden Ansprüche 1 bis 11, **dadurch gekennzeichnet, daß** wenigstens ein Teil der Strahlung von Bogenlampen emittiert wird.

14. Verfahren nach einem der Ansprüche 5 bis 13, **dadurch gekennzeichnet, daß** wenigstens eine der Lampen in ihrer Strahlung moduliert ist.

15. Verfahren nach einem der Ansprüche 5 bis 14, **dadurch gekennzeichnet, daß** alle Lampen dieselbe Strahlungsmodulation aufweisen.

16. Verfahren nach einem der Ansprüche 5 bis 14, **dadurch gekennzeichnet, daß** die Lampen unterschiedliche Strahlungsmodulationen aufweisen.

17. Verfahren nach einem der Ansprüche 14 bis 16, **dadurch gekennzeichnet, daß** die Strahlungsmodulation für wenigstens einige der Lampen zeitlich synchron erfolgt.

18. Verfahren nach einem der vorhergehenden Ansprüche, **dadurch gekennzeichnet, daß** der Modulationsgrad oder die Modulationstiefe der von der Strahlungsquelle (4,5) abgegebenen Strahlung von der abgestrahlten Lampenintensität unabhängig ist.

19. Verfahren nach einem der vorhergehenden Ansprüche, **dadurch gekennzeichnet, daß** der Modulationsgrad oder die Modulationstiefe von der abgestrahlten Lampenintensität abhängig ist.

20. Verfahren nach einem der vorhergehenden Ansprüche, **dadurch gekennzeichnet, daß** der Modulationsgrad oder die Modulationstiefe gesteuert wird.

21. Verfahren nach einem der vorhergehenden Ansprüche, **dadurch gekennzeichnet, daß** die Lampenintensität pulsweiten-moduliert ist.

22. Verfahren nach einem der vorhergehenden Ansprüche, **dadurch gekennzeichnet, daß** die Strahlung durch Verwendung von Tabellenwerten mit einem Datenverarbeitungsprogramm moduliert wird.

23. Verfahren nach einem der Ansprüche 1 bis 21, **dadurch gekennzeichnet, daß** die Strahlung durch Ändern der Zählerfrequenz von Generatoren für die Pulsweiten-Modulation moduliert wird.

24. Verfahren nach einem der vorhergehenden Ansprüche, **dadurch gekennzeichnet, daß** die von der Strahlungsquelle (4,5) abgegebene Strahlung durch eine Modulation der Ansteuersignale für die Strahlungsquelle(n) moduliert wird.

25. Verfahren nach einem der vorhergehenden Ansprüche, **gekennzeichnet durch** die Verwendung zur Bestimmung der Temperatur, Reflektivität, Transmissivität und/oder Emissivität eines Gegenstands.

26. Verfahren nach einem der vorhergehenden Ansprüche, **gekennzeichnet durch** die Verwendung im Zusammenhang mit dem thermischen Behandeln von Halbleitersubstraten (2).

27. Verfahren nach Anspruch 26, **dadurch gekennzeichnet, daß** die thermische Behandlung der Halbleitersubstrate (2) innerhalb einer Reaktionskammer (3) erfolgt, die im wesentlichen aus einem, für die elektromagnetische Strahlung der Strahlungsquellen (4,5) und für das Spektrum der Meßwellenlängen der Detektoren (6,7) transparenten Material besteht.

28. Verfahren nach Anspruch 27, **dadurch gekennzeichnet, daß** das transparente Material Quarzglas und/oder Saphir umfaßt.

29. Verfahren nach Anspruch 27 oder 28, **dadurch gekennzeichnet, daß** das Material einen über das Lampenspektrum gemittelten Absorptionskoeffizienten zwischen 0.001 1/cm und 0.1 1/cm aufweist.

30. Verfahren nach Anspruch 27 bis 29, **dadurch gekennzeichnet, daß** die Strahlung der Strahlungsquelle (4,5) eine Wanddicke der Reaktionskammer (3) zwischen 1mm und 5cm durchstahlt.

**31.** Verfahren nach einem der vorhergehenden Anspruche, **dadurch gekennzeichnet, daß** der erste Detektor (7) ein Strahlungsdetektor ist.

**32.** Verfahren nach Anspruch 31, **dadurch gekennzeichnet, daß** der erste Detektor (7) die von der Strahlungsquelle (4,5) abgegebene Strahlung über optische Leitungen oder Lichtkanäle empfängt.

**33.** Verfahren nach Anspruch 32, **dadurch gekennzeichnet, daß** durch eine Anordnung der Strahlungsquellen (4,5) und der optischen Leitungen oder der Lichtkanäle relativ zueinander der erste Strahlungsdetektor (7) ein Signal generiert, das frei von Einflüssen von Filamenthaltevorrichtungen oder anderer, den Strahlungsfluß oder die Strahlungstemperatur der Strahlungsquelle (4,5) beeinträchtigender Mittel ist.

**34.** Verfahren nach einem der Ansprüche 1 bis 31, **dadurch gekennzeichnet, daß** der erste Detektor (7) ein Temperatursensor ist.

**35.** Verfahren nach einem der Ansprüche 1 bis 30, **dadurch gekennzeichnet, daß** der erste Detektor (7) einen mit der abgestrahlten Strahlung der Strahlungsquellen (4,5) in Beziehung stehenden Parameter mißt.

**36.** Verfahren nach Anspruch 35, **dadurch gekennzeichnet, daß** der Detektor (7) die Impedanz der Strahlungsquellen (4,5) mißt.

**Claims**

**1.** Method of measuring electromagnetic radiation that is radiated from a surface of an object (2) that is irradiated by electromagnetic radiation given off by at least one radiation source (4, 5), whereby the radiation given off by the radiation source (4, 5) is determined by at least one first detector (7) and the radiation given off by the irradiated object (2) is determined by at least one second detector (6) that measures the radiation, and whereby the radiation from at least one radiation source (4, 5) is actively modulated with at least one characteristic parameter, and the radiation determined by the second detector (6) is corrected with the radiation determined by the first detector (7) **characterized in that** the characteristic parameter is non-periodically modulated.

**2.** Method according to claim 1, **characterized in that** the active modulation of radiation given off by the radiation source (4, 5), for the characterization thereof, is used during the correction of the radiation determined by the second detector (6).

**3.** Method according to claim 1 or 2, **characterized in that** the radiation given off from at least one radiation source (4, 5) is amplitude, frequency and/or phase modulated.

**4.** Method according to one of the proceding claims, **characterized in that** the signal shape during an amplitude modulation has a continuous signal pattern.

**5.** Method according to one of the preceding claims, **characterized in that** the radiation source (4, 5) comprises a plurality of lamps.

**6.** Method according to claim 5, **characterized in that** the lamps emit their radiation from at least one filament having an at least partially coiled filament structure.

**7.** A method according to claim 6, **characterized in that** due to the filament structure of the lamp a predefined geometrical and spectral radiation can be achieved.

**8.** Method according to claim 6 or 7, **characterized in that** the lamp radiation is emitted from filament sections having alternating coiled and uncoiled filament structure.

**9.** Method according to one of the claims 6 to 8, **characterized in that** the lamp radiation is emitted from two individually controllable filaments.

**10.** Method according to one of the claims 6 to 9, **characterized in that** the lamp radiation is emitted from a filament having at least three electrical connections.

**11.** Method according to one of the claims 6 to 10, **characterized in that** the density of the filament structure varies along the filament.

**12.** Method according to one of the preceding claims, **characterized in that** the radiation is emitted from a halogen lamp.

**13.** Method according to one of the preceding claims 1 to 11, **characterized in that** at least a portion of the radiation is emitted from arc lamps.

**14.** Method according to one of the claims 5 to 13, **characterized in that** the radiation of at least one of the lamps is modulated.

**15.** Method according to one of the claims 5 to 14, **characterized in that** all of the lamps have the same radiation modulation.

**16.** Method according to one of the claims 5 to 14, **characterized in that** the lamps have different radiation modulations.

**17.** Method according to one of the claims 14 to 16, **characterized in that** the radiation modulation for at least some of the lamps is effected synchronously over time.

**18.** Method according to one of the preceding claims, **characterized in that** the degree or depth of modulation of the radiation given off by the radiation source (4, 5) is independent of the radiated lamp intensity.

**19.** Method according to one of the preceding claims, **characterized in that** the degree or depth of modulation is dependent upon the radiated lamp intensity.

**20.** Method according to one of the preceding claims, **characterized in that** the degree or depth of modulation is controlled.

**21.** Method according to one of the preceding claims, **characterized in that** the lamp intensity is pulse width modulated.

**22.** Method according to one of the preceding claims, **characterized in that** the radiation is modulated with a data processing program by using tabular values.

**23.** Method according to one of the claims 1 to 21, **characterized in that** the radiation is modulated for the pulse width modulation by altering the register frequency of generators.

**24.** Method according to one of the preceding claims, **characterized in that** the radiation given off by the radiation source (4, 5) is modulated by a modulation of the control signals for the radiation source or sources.

**25.** Method according to one of the preceding claims, **characterized by** the use to determine the temperature, reflectivity, transmissivity and/or emissivity of an object.

**26.** Method according to one of the preceding claims, **characterized by** the use in conjunction with the thermal treatment of semiconductor substrates (2).

**27.** Method according to claim 26, **characterized in that** the thermal treatment of the semiconductor substrate (2) is effected within a reaction chamber (3) that essentially comprises a material that is transparent for the electromagnetic radiation of the radiation sources (4, 5) and for the spectrum of the measurement wavelengths of the detectors (6, 7)

**28.** Method according to claim 27, **characterized in that** the transparent material comprises quartz glass and/or sapphire.

**29.** Method according to claim 27 or 28, **characterized in that** the material has an absorption coefficient that is averaged over the lamp spectrum and is between 0.001 cm$^{-1}$ and 0.1 cm$^{-1}$.

**30.** Method according to claim 27 to 29, **characterized in that** the radiation of the radiation source (4, 5) is transmitted through a reaction chamber (3) wall thickness between 1 mm and 5 cm.

**31.** Method according to one of the preceding claims, **characterized, in that** the first detector (7) is a radiation detector.

**32.** Method according to claim 31, **characterized in that** the first detector (7) receives the radiation given off by the radiation source (4, 5) via optical lines or light channels.

**33.** Method according to claim 32, **characterized in that** by means of an arrangement of the radiation source (4, 5) and the optical lines or the light channels relative to one another, the first radiation detector (7) generates a signal that is free of influences from filament holding mechanisms or other means that adversely affect the radiation flux or the radiation temperature of the radiation source (4, 5).

**34.** Method according to one of the claims 1 to 31, **characterized in that** the first detector (7) is a temperature sensor.

**35.** Method according to one the claims 1 to 30, **characterized in that** the first detector (7) measures a parameter that is related to the radiation given off by the radiation sources (4, 5).

**36.** Method according to claim 35, **characterized in that** the detector (7) measures the impedance of the radiation sources (4, 5).

**Revendications**

**1.** Procédé de mesure d'un rayonnement électromagnétique qui est émis par une surface d'un objet (2) lequel est irradié par un rayonnement électromagnétique émis par au moins une source de rayonnement (4, 5), le rayonnement émis par la source de rayonnement (4, 5) étant déterminé avec au moins un premier détecteur (7) et le rayonnement émis par l'objet (2) irradié étant déterminé avec au moins un deuxième détecteur (6) mesurant le rayonnement, et le rayonnement émis par au moins une source de rayonnement (4, 5) étant modulé de manière active avec au moins un paramètre caractéristique, et le rayonnement déterminé par le deuxième détecteur (6) étant corrigé, pour compenser le rayonnement de la source de rayonnement (4, 5), réfléchi par l'objet (2), par le rayonnement déterminé par le premier détecteur (7), **caractérisé en ce que** le paramètre caractéristique est modulé de façon non périodique.

2. Procédé selon la revendication 1, **caractérisé en ce que** la modulation active du rayonnement émis par la source de rayonnement (4, 5) est utilisée pour la caractérisation lors de la correction du rayonnement déterminé par le deuxième détecteur (6).

3. Procédé selon la revendication 1 ou 2, **caractérisé en ce que** le rayonnement émis par au moins une source de rayonnement (4, 5) est modulé en amplitude, en fréquence et/ou en phase.

4. Procédé selon l'une des revendications précédentes, **caractérisé en ce que** la forme des signaux présente, dans le cas d'une modulation en amplitude, une allure constante des signaux.

5. Procédé selon l'une des revendications précédentes, **caractérisé en ce que** la source de rayonnement (4, 5) est constituée de plusieurs lampes.

6. Procédé selon la revendication 5, **caractérisé en ce que** les lampes émettent leur rayonnement par au moins un filament avec une structure de filament au moins en partie enroulée.

7. Procédé selon la revendication 6, **caractérisé en ce que** par la structure des filaments de la lampe on peut obtenir un profil de rayonnement géométrique et spectral prédéfini.

8. Procédé selon la revendication 6 ou 7, **caractérisé en ce que** le rayonnement de la lampe est émis par des segments de filament avec une structure alternativement enroulée et non enroulée.

9. Procédé selon l'une des revendications 6 à 8, **caractérisé en ce que** le rayonnement de la lampe est émis par deux filaments pouvant être commandés individuellement.

10. Procédé selon l'une des revendications 6 à 9, **caractérisé en ce que** le rayonnement de la lampe est émis par un filament avec au moins trois connexions électriques.

11. Procédé selon l'une des revendications 6 à 10, **caractérisé en ce que** la densité de la structure des filaments varie le long du filament.

12. Procédé selon l'une des revendications précédentes, **caractérisé en ce que** le rayonnement est émis par une lampe à halogène.

13. Procédé selon l'une des revendications 1 à 11 précédentes, **caractérisé en ce qu'**au moins une partie du rayonnement est émis par des lampes à arc.

14. Procédé selon l'une des revendications 5 à 13, **caractérisé en ce qu'**au moins l'une des lampes est modulée dans son rayonnement.

15. Procédé selon l'une des revendications 5 à 14, **caractérisé en ce que** toutes les lampes présentent la même modulation du rayonnement.

16. Procédé selon l'une des revendications 5 à 14, **caractérisé en ce que** les lampes présentent des modulations de rayonnement différentes.

17. Procédé selon l'une des revendications 14 à 16, **caractérisé en ce que** la modulation du rayonnement s'effectue de manière synchronisée dans le temps pour au moins quelques unes des lampes.

18. Procédé selon l'une des revendications précédentes, **caractérisé en ce que** le degré de modulation ou la profondeur de modulation du rayonnement émis par la source de rayonnement 4, 5 est indépendant de l'intensité rayonnée par la lampe.

19. Procédé selon l'une des revendications précédentes, **caractérisé en ce que** le degré de modulation ou la profondeur de modulation dépend de l'intensité rayonnée par la lampe.

20. Procédé selon l'une des revendications précédentes, **caractérisé en ce que** le degré de modulation ou la profondeur de modulation est commandé.

21. Procédé selon l'une des revendications précédentes, **caractérisé en ce que** l'intensité de la lampe est modulée en largeur d'impulsion.

22. Procédé selon l'une des revendications précédentes, **caractérisé en ce que** le rayonnement est modulé par utilisation de valeurs d'un tableau avec un programme de traitement des données.

23. Procédé selon l'une des revendications 1 à 21, **caractérisé en ce que** le rayonnement est modulé par modification de la fréquence du compteur de générateur pour la modulation de la largeur d'impulsion.

**24.** Procédé selon l'une des revendications précédentes, **caractérisé en ce que** le rayonnement émis par la source de rayonnement (4, 5) est modulé par une modulation des signaux de commande pour la (les) source(s) de rayonnement.

**25.** Procédé selon l'une des revendications précédentes, **caractérisé par** son utilisation pour déterminer la température, la réflectance, la transmittance et/ou l'émittance d'un objet.

**26.** Procédé selon l'une des revendications précédentes, **caractérisé par** son utilisation ensemble avec le traitement thermique de substrats à semi-conducteurs (2).

**27.** Procédé selon la revendication 26, **caractérisé en ce que** le traitement thermique des substrats à semi-conducteurs (2) s'effectue à l'intérieur d'une chambre de réaction (3) qui est essentiellement constituée d'un matériau transparent pour le rayonnement électromagnétique des sources de rayonnement (4, 5) et pour le spectre des longueurs d'ondes de mesure des détecteurs (6, 7).

**28.** Procédé selon la revendication 27, **caractérisé en ce que** le matériau transparent comprend du verre de quartz et/ou du saphir.

**29.** Procédé selon la revendication 27 ou 28, **caractérisé en ce que** le matériau présente un coefficient d'absorption moyen sur le spectre de la lampe, compris entre 0.001 1/cm et 0.1 1/cm.

**30.** Procédé selon la revendication 27 à 29, **caractérisé en ce que** le rayonnement de la source de rayonnement (4, 5) traverse une épaisseur de paroi de la chambre de réaction (3) comprise entre 1 mm et 5 cm.

**31.** Procédé selon l'une des revendications précédentes, **caractérisé en ce que** le premier détecteur (7) est un détecteur de rayonnement.

**32.** Procédé selon la revendication 31, **caractérisé en ce que** le premier détecteur (7) reçoit le rayonnement émis par la source de rayonnement (4, 5) par des lignes optiques ou des canaux à lumière.

**33.** Procédé selon la revendication 32, **caractérisé en ce que** par une disposition des sources de rayonnement (4, 5) et des lignes optiques ou des canaux de lumière les uns par rapport aux autres, le premier détecteur de rayonnement (7) génère un signal qui est exempt d'influences de dispositifs de fixation de filament ou d'autres moyens gênant le flux du rayonnement ou la température de rayonnement de la source de rayonnement (4, 5).

**34.** Procédé selon l'une des revendications 1 à 31, **caractérisé en ce que** le premier détecteur (7) est une sonde de température.

**35.** Procédé selon l'une des revendications 1 à 30, **caractérisé en ce que** le premier détecteur (7) mesure un paramètre en relation avec le rayonnement émis par les sources de rayonnement (4, 5).

**36.** Procédé selon la revendication 35, **caractérisé en ce que** le détecteur (7) mesure l'impédance des sources de rayonnement (4, 5).

FIG.1

FIG.2

FIG.3a

FIG.3b

FIG.4